**Europäisches Patentamt**

**European Patent Office**

**Office européen des brevets**

(11) Veröffentlichungsnummer: **0 251 305 B1**

# EUROPÄISCHE PATENTSCHRIFT

(45) Veröffentlichungstag der Patentschrift: **17.07.91**

(51) Int. Cl.⁵: **B60N 2/24**

(21) Anmeldenummer: **87109429.8**

(22) Anmeldetag: **30.06.87**

(54) **Kraftfahrzeug mit einem Kinderrückhaltesystem.**

(30) Priorität: **01.07.86 DE 3622044**

(43) Veröffentlichungstag der Anmeldung:
**07.01.88 Patentblatt 88/01**

(45) Bekanntmachung des Hinweises auf die
Patenterteilung:
**17.07.91 Patentblatt 91/29**

(84) Benannte Vertragsstaaten:
**CH DE GB IT LI**

(56) Entgegenhaltungen:
**EP-A- 0 197 910**
**GB-A- 482 178**
**US-A- 4 186 962**
**US-A- 4 500 133**
**US-A- 4 583 253**

(73) Patentinhaber: **PEG Kinderwagen Vertriebs-
und Service GmbH**
**Rudolf-Diesel-Strasse 6**
**W-8060 Dachau(DE)**

(72) Erfinder: **Gläser, Dieter**
**Silcherstrasse 13**
**W-8000 München 45(DE)**
Erfinder: **Hasa, Kurt**
**Einsteinstrasse 2**
**Garching b. München(DE)**

(74) Vertreter: **Patentanwälte Grünecker, Kinkeldey, Stockmair & Partner**
**Maximilianstrasse 58**
**W-8000 München 22(DE)**

## Beschreibung

Die Erfindung bezieht sich auf ein Kinderrückhaltesystem der im Oberbegriff des Patentanspruchs 1 genannten Art.

Ein solches, aus der US-PS 4 500 133 bekanntes Kinderrückhaltesystem für ein Kraftfahrzeug weist eine Liegeschale auf, die von einem Gestell getragen wird und die mit dem Gestell verbunden ist. Ein Teil des Gestelles liegt auf dem Vordersitz auf. Ein der Lehne zugeordneter Bereich des Gestells wird mit einem Gurt gesichert.

Es ist allgemein bekannt, daß es aus Sicherheitsgründen erforderlich ist, beim Transport eines Kindes, insbesondere eines Kleinkindes, auf einem Vordersitz eines Kraftfahrzeuges, nämlich auf dem Beifahrersitz, ein geeignetes Kinderrückhaltesystem zu verwenden, welches verhindern soll, daß das Kind bei einem Aufprall des Kraftfahrzeuges oder bei einer scharfen Bremsung verletzt wird. Insbesondere bei Kleinkindern ist es nicht möglich, die für Erwachsene entwickelten Rückhaltesysteme zu verwenden, d.h. das Kind mit Blick in die Fahrtrichtung auf dem Sitz des Kraftfahrzeuges anzuordnen, da einerseits bei einer starken Verzögerung des Kraftfahrzeuges das Kind wegen seiner geringen Größe nicht sicher gehalten werden kann und da es andererseits nicht möglich ist, ein derartiges Kleinkind über längere Zeit in einer sitzenden Stellung zu transportieren. Es wurde deshalb ein Kinderrückhaltesystem entwickelt, welches eine Liegeschale aufweist, in der das Kleinkind in einer nur in einem flachen Winkel gegen die Horizontale geneigten Stellung liegen kann. Die Liegeschale weist ein Gestell auf, an welcher sie gelagert ist. Das Gestell kann auf den Vordersitz, d.h. auf den Beifahrersitz des Kraftfahrzeuges aufgesetzt werden, wobei dies so erfolgt, daß das Kleinkind seine Blickrichtung entgegen der Fahrtrichtung hat. Der für den Beifahrersitz vorgesehene Rückhaltegurt des Kraftfahrzeuges wird einmal um die Liegeschale geschlungen. Auf diese Weise bietet das Kinderrückhaltesystem einen guten Schutz bei starken Verzögerungen des Kraftfahrzeuges und bei von dem Kraftfahrzeug verursachten Auffahrunfällen, bei welchem die Frontpartie des Kraftfahrzeuges auf das Hindernis auftrifft.

Das oben beschriebene Kinderrückhaltesystem ist insbesondere für Kleinkinder bis zum neunten Lebensmonat bzw. für Kleinkinder bis zu einem Gewicht von 9 kg geeignet.

Es hat sich jedoch herausgestellt, daß das oben beschriebene Kinderrückhaltesystem bei einem Aufprall eines dritten Fahrzeuges auf das Heck des mit dem Kinderrückhaltesystem versehenen Fahrzeugs keinen oder nur einen geringen Schutz für das Kleinkind bieten kann, da bei einem derartigen Aufprall die Liegeschale in Richtung auf die Rückenlehne des Beifahrersitzes hochgeschwenkt wird, was dazu führt, daß das Kind mit seinem Kopf auf den oberen Bereich der Rückenlehne oder gegen die Kopfstützenkonstruktion des Vordersitzes aufprallt. Obwohl die Liegeschale des Kinderrückhaltesystems mit Gurten zum Hhalten des Kindes ausgestattet sein kann, ist es bei einem Aufprall eines dritten Fahrzeugs auf das Heck des mit dem Kinderrückhaltesystems versehenen Fahrzeugs nicht möglich, das Kind wirksam zu schützen. Der Aufprall des Kleinkindes auf die Rückenlehne des Beifahrersitzes bzw. auf dessen Kopfstütze erfolgt, wie sich in Versuchen gezeigt hat, mit kurzzeitigen Beschleunigungen von 50 bis 70 g.

Der Erfindung liegt die Aufgabe zugrunde, ein Kinderrückhaltesystem zu schaffen, welches bei einem Aufprall eines dritten Fahrzeuges auf das Heck des mit dem Kinderrückhaltesystem versehenen Fahrzeugs einen sicheren Schutz für das Kind bietet, und welches einfach handhabbar und kostengünstig herstellbar ist.

Die Aufgabe wird erfindungsgemäß durch, die Merkmale des unabhängigen Anspruchs 1 gelöst.

Das Kinderrückhaltesystem zeichnet sich durch den Vorteil aus, daß bei einem Aufprall auf das Heck des Kraftfahrzeuges sicher verhindert wird, daß die Liegeschale hochklappt und sich der Rückenlehne des Vordersitzes annähert. Dadurch wird verhindert, daß das in der Liegeschale befindliche Kind gegen feststehende Teile des Kraftfahrzeuges prallt. Ein besonderer Vorteil des Kinderrückhaltesystems liegt auch darin, daß die Fixierung des Gestells, welches die Liegeschale trägt, mittels eines Gurtes erfolgt, welcher sich beim normalen Gebrauch des Kraftfahrzeuges, d.h. wenn das Kinderrückhaltesystem nicht auf dem Vordersitz angeordnet ist, in keiner Weise als störend bemerkbar macht. Insbesondere wird die Sitzqualität auf dem Vordersitz durch den Gurt nicht beeinträchtigt und es ist weiterhin möglich, den Vordersitz ohne durch das Kinderrückhaltesystem bedingte Einschränkungen zu verstellen.

Ein weiterer Vorteil des erfindungsgemäßen Kinderrückhaltesystems liegt darin, daß die zusätzlich entstehenden Kosten, welche durch den Gurt hervorgerufen werden, äußerst gering sind. Weiterhin erweist es sich als vorteilhaft, daß die Bedienungsperson auch ohne spezielle Einweisung oder besondere technische Fähigkeiten ohne weiteres in der Lage ist, das Kinderrückhaltesystem zu verwenden.

Als besonders vorteilhaft erweist es sich, daß der Gurt in Richtung der Kraftfahrzeuglängsachse die Sitzfläche des Vordersitzes umschlingend angeordnet ist. Diese Anordnung des Gurtes ist ohne irgendwelche Umbauarbeiten bei praktisch sämtlichen Kraftfahrzeugen möglich und kann auch von einem Laien innerhalb kürzester Zeit vorgenommen werden. Weiterhin weist diese Anordnung des Gurtes den Vorteil auf, daß er bei abgenommenem Kinderrückhaltesystem die Benutzung des Vordersitzes durch eine erwachsene Person in keiner Weise behindert. Weiterhin kann durch eine entsprechende farbliche Abstimmung des Gurtes wegen der bei fast allen Kraftfahrzeugvordersitzen in Kraftfahrzeuglängsrichtung erfolgten Absteppung des Bezuges des Sitzes erreicht werden, daß der Gurt sich optisch nicht als störend erweist.

Mit Vorteil ist das erfindungsgemäße Kinderrückhaltesystem so ausgebildet, daß die Enden des Gurtes 5 mittels eines Gurtschlosses lösbar verbunden sind. Auf diese Weise ist es möglich, den Gurt in besonders einfacher Weise wieder von dem Vordersitz des Kraftfahrzeuges zu entfernen. Weiterhin kann der in Fahrtrichtung vorneliegende Teil des Gestells des Kinderrückhaltesystems auf besonders einfache Weise mit dem Gurt in Eingriff gebracht werden, in dem das Gurtschloß geöffnet wird und ein Ende des Gurtes um das Gestell herumgeführt oder um dieses herumgeschlungen wird.

In besonders vorteilhafter Weise ist die Eingriffsvorrichtung in Form zweier im mittleren Bereich der Querstrebe angeordneter Anschläge ausgebildet, wobei die Anschläge zueinander einen Abstand aufweisen, der der Breite des Gurtes angepaßt ist. Auf diese Weise wird eine seitliche Fixierung des Gestells auf dem Vordersitz sichergestellt, so daß auch bei schnellen Kurvenfahrten die Liegeschale nicht aus ihrer Position verrutschen kann. Weiterhin wird in besonders einfacher Weise verhindert, daß bei einem Aufprall auf das Heck des Fahrzeuges der Gurt von der Querstrebe des Gestells abrutscht und das Gestell zu einer nach hinten gerichteten Bewegung freigibt.

Eine günstige Ausgestaltung der Erfindung liegt auch darin, daß die Eingriffsvorrichtung in Form eines gelenkig an der Querstrebe gelagerten, den Gurt umgreifenden Riegels ausgebildet ist. Dabei kann der Riegel an beliebiger Stelle im mittleren Bereich der Querstrebe angeordnet werden, so daß es beispielsweise möglich ist, den Riegel unter dem nicht geöffneten Gurt durchzuführen und das freie Ende des Riegels in die Querstrebe einzuhängen, so daß das Gestell in besonders einfacher Weise auf dem Vordersitz fixiert werden kann. Weiterhin ist es möglich, den Riegel auf der Oberseite der Querstrebe vorzusehen, um eine zusätzliche Führung des Gurtes zu gewährleisten. Auch ist es möglich, den Riegel an der in Fahrtrichtung hintenliegenden Seite der Querstrebe anzuordnen, wodurch es sowohl möglich ist, das Gestell ohne Öffnen des Gurtes mit diesem in Eingriff zu bringen, als auch den Gurt zusätzlich zu führen.

Eine günstige Ausgestaltung des erfindungsgemäßen Kinderrückhaltesystems ist auch dadurch gegeben, daß die Eingriffsvorrichtung in Form eines die Querstrebe zum Teil umgreifenden und in diese einhängbaren Bügels ausgebildet ist. Auf diese Weise kann die Querstrebe in Form eines glatten Rohres ausgebildet sein, ohne daß zusätzliche Eingriffsteile an der Querstrebe erforderlich sind. Der Bügel kann beispielsweise unter dem nicht geöffneten Gurt durchgeführt und anschließend in die Querstrebe eingehängt werden. Auf diese Weise ist es möglich, das Gestell besonders schnell und einfach mit dem Gurt in Eingriff zu bringen.

Eine besonders vorteilhafte Ausgestaltung des erfindungsgemäßen Kinderrückhaltesystems ist auch dadurch gegeben, daß der Bügel ein im eingehängten Zustand im wesentlichen parallel zur Querstrebe angeordnetes Mittelteil sowie zwei mit dem Mittelteil verbundene Schenkel aufweist, deren eines freie Ende zum Umgreifen der Querstrebe jeweils gebogen ausgebildet ist und an deren anderem Ende jeweils ein Schwenkhebel schwenkbar gelagert ist. Dabei erweist es sich auch als vorteilhaft, daß der Schwenkhebel in eine dem freien Ende zugewandte Stellung bringbar ist. Weiterhin ist es vorteilhaft, daß die Schenkel zueinander einen Abstand aufweisen, der zumindest der Breite des Gurtes gleich ist. Durch diese Ausgestaltung des Bügels, welcher im nicht eingehängten Zustand als separates Teil handhabbar ist, kann ein Einhängen des Gurtes in die Querstrebe auf besonders einfache Weise erfolgen. Üblicherweise ist der Gurt unterhalb der Querstrebe angeordnet, so daß es erforderlich ist, den Bügel unter dem Gurt durchzuführen und anschließend in die Querstrebe einzuhängen. Die freien Enden der Schenkel des Bügels umgreifen dabei die Querstrebe, wobei der Umgreifungswinkel üblicherweise 180° beträgt. Mittels der an den anderen Enden der Schenkel schwenkbar gelagerten Schwenkhebel ist es möglich, ein Herausrutschen der Querstrebe zu verhindern, wenn nämlich die Schwenkhebel dem die Querstrebe umgreifenden freien Ende zugewandt sind. Durch eine geeignete Dimensionierung des Bügels kann dabei auch eine Klemmwirkung erreicht werden, mittels der ein seitliches Verrutschen des Bügels relativ zu der Querstrebe verhindert wird. Wenn die Schenkel zueinander den obenerwähnten Abstand aufweisen, ist es auf besonders sichere Weise möglich, den Gurt in Eingriff mit der Querstange des Gestells zu bringen und sowohl ein seitliches Verrutschen des Gestells als auch ein Hochklappen des Gestells bei einem Aufprall auf das Heck des Kraftfahrzeugs zu verhindern.

Im folgenden wird die Erfindung anhand von Ausführungsbeispielen in Verbindung mit der Zeichnung beschrieben. Dabei zeigt:

Fig. 1    eine perspektivische Ansicht eines Bereichs eines Kraftfahrzeuges mit dem erfindungsgemäßen Kinderrückhaltesystem,

Fig. 2    eine Ansicht ähnlich Fig. 1, jedoch ohne das Kinderrückhaltesystem,

Fig. 3    eine perspektivische schematisierte Teilansicht des erfindungsgemäßen Kraftfahrzeuges,

Fig. 4    einen Teil des Gestells des erfindungsgemäßen Kinderrückhaltesystems,

Fig. 5    ein weiteres Ausführungsbeispiel der erfindungsgemäßen Eingriffsvorrichtung,

Fig. 6    eine Draufsicht auf ein weiteres Ausführungsbeispiel der in Fig. 5 dargestellten Eingriffsvorrichtung,

Fig. 7    eine Seitenansicht auf die Eingriffsvorrichtung gemäß Fig. 6 und

Fig. 8    eine Seitenansicht, ähnlich der Fig. 7, wobei sich jedoch die Eingriffsvorrichtung in der betriebsbereiten Stellung befindet.

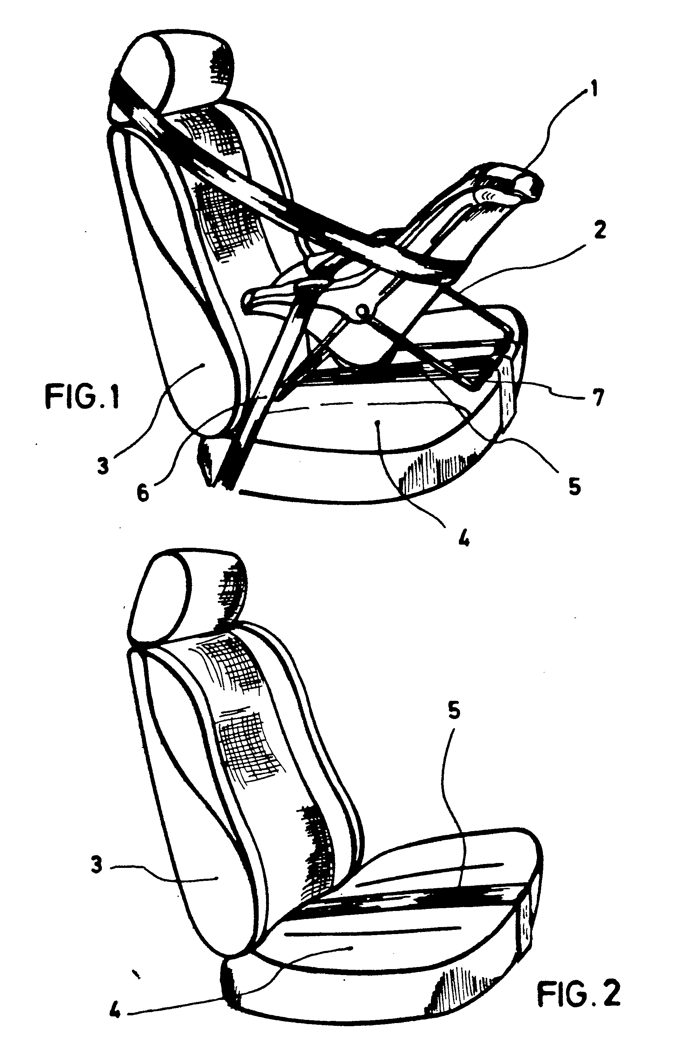

In Fig. 1 ist ein Teil eines Kraftfahrzeuges dargestellt, nämlich ein Vordersitz 3 (Beifahrersitz), welcher mit dem erfindungsgemäßen Kinderrückhaltesystem versehen ist. Auf dem Vordersitz 3 liegt ein Gestell 2, welches eine Liegeschale 1 trägt. Die Liegeschale 1 ist mit dem Gestell 2 verbunden, wobei das Gestell 2 auf einer Sitzfläche 4 des Vordersitzes 3 aufgelegt ist. Ein Rückhaltegurt 6 des Kraftfahrzeuges, nämlich der dem Vordersitz zugeordnete Rückhaltegurt, ist um die Liegeschale 1 geschlungen, um diese bei einem Frontalaufprall des Kraftfahrzeuges zu halten. Im mittleren Bereich des Vordersitzes 3 ist ein Gurt 5 vorgesehen, welcher, wie im einzelnen im Abb. 2 dargestellt, die Sitzfläche 4 des Vordersitzes 3 in Richtung der Kraftfahrzeuglängsachse umgreift. Das Gestell 2 weist eine vordere Querstrebe 7 auf, welche als Auflagefläche des Gestells 2 dient. Der Gurt 5 ist bei der in Fig. 1 gezeigten Ausgestaltung so angeordnet, daß er die Querstrebe 7 übergreift, um zu verhindern, daß diese bei einem Aufprall auf das Heck des Kraftfahrzeuges von der Sitzfläche 4 des Vordersitzes 3 wegbewegt wird.

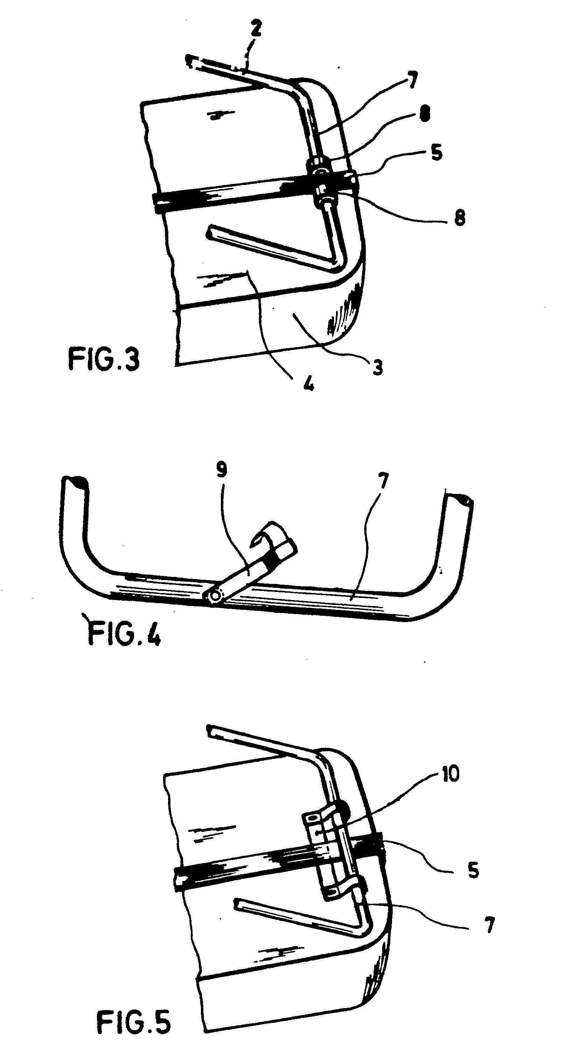

Die Fig. 3 bis 5 zeigen verschiedene Ausführungsbeispiele einer Eingriffsvorrichtung, mittels derer der Gurt 5 in Eingriff mit der Querstrebe 7 bringbar ist. Bei dem in Fig. 3 gezeigten Ausführungsbeispiel ist die Querstrebe 7 in ihrem mittleren Bereich mit zwei ringartigen Wülsten oder Anschlägen 8 versehen, welche fest mit der Querstrebe 7 verbunden sind. Die Anschläge 8 weisen zueinander einen Abstand auf, welcher mindestens der Breite des Gurtes 5 entspricht, so daß verhindert wird, daß die Querstrebe 7 sich seitlich relativ zu der Sitzfläche 4 bzw. zu dem Gurt 5 bewegen kann.

In Fig. 4 ist in schematischer Weise ein Riegel 9 dargestellt, welcher schwenkbar an der Querstrebe 7 gelagert ist. Der Riegel 9 kann an der in Fahrtrichtung vorneliegenden Seite der Querstrebe 7 vorgesehen sein, es ist jedoch auch möglich, diesen an beliebiger Stelle, d.h. an der Oberseite oder der Hinterseite oder auch an der Unterseite der Querstrebe 7 vorzusehen. In Abhängigkeit von dem Ort der Anordnung des Riegels 9 übergreift oder untergreift dieser den Gurt 5 und bewirkt damit, daß eine seitliche Bewegung der Querstrebe 7 verhindert wird. Weiterhin ist es, je nach dem Ort der Anlenkung des Riegels 9 möglich, das Gestell 2 bzw. dessen Querstrebe 7 mit dem Gurt 5 in Eingriff zu bringen, ohne den Gurt 5 von dem Vordersitz 3 zu lösen. Der Riegel 9 weist in seinem zentralen Bereich im verriegelten Zustand einen Abstand zu der Querstrebe 7 auf, so daß es möglich ist, den Gurt 5 zwischen der Querstrebe 7 und dem Riegel 9 durchzuführen.

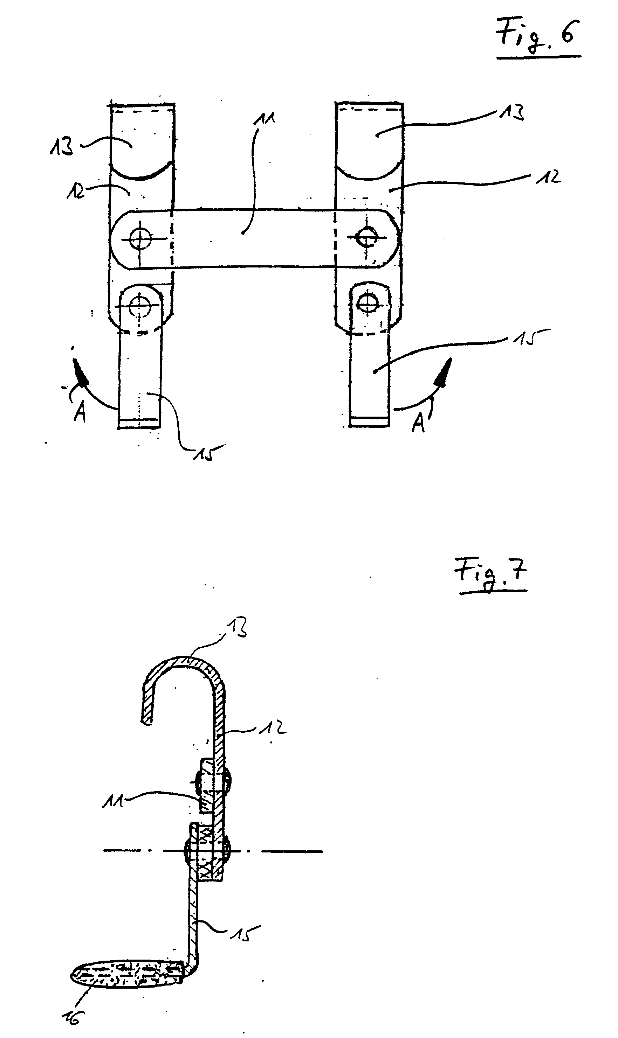

In Fig. 5 ist ein weiteres Ausgestaltungsbeispiel der erfindungsgemäßen Eingriffsvorrichtung dargestellt, welche aus einem Bügel 10 besteht, der so ausgebildet ist, daß seine freien Enden die Querstrebe 7 zum Teil umgreifen können. Der Bügel 10 ist als separates Teil ausgebildet und kann, wie in Fig. 5 dargestellt, unter dem nichtgeöffneten Gurt 5 durchgeführt und anschliessend in die Querstrebe 7 eingehängt werden.

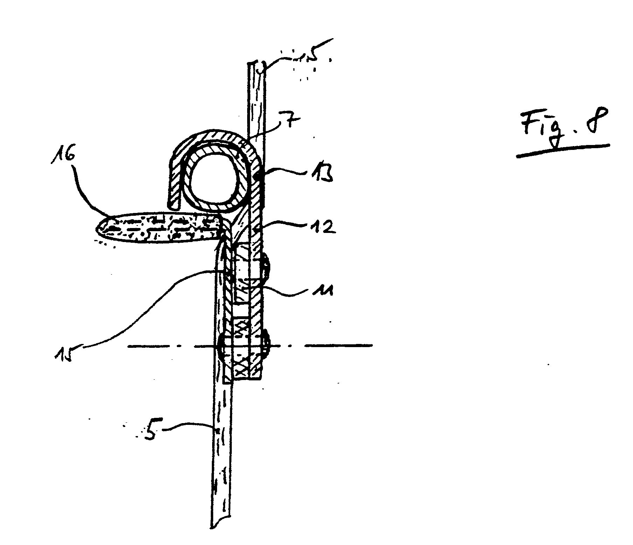

Die Fig. 6 bis 8 zeigen ein weiteres Ausführungsbeispiel des im Zusammenhang mit Fig. 5 beschriebenen Bügels. Das Ausführungsbeispiel der Fig. 6 bis 8 unterscheidet sich von dem in Fig. 5 gezeigten Ausführungsbeispiel darin, daß der Bügel 10 ein Mittelteil 11 aufweist, welches im eingehängten Zustand des Bügels 10 im wesentlichen parallel zu der Querstrebe 7 des Gestells 2 angeordnet ist. Von den beiden Endbereichen des länglichen Mittelteils 11 aus erstrecken sich zwei Schenkel 12, welche fest mit dem Mittelteil 11 verbunden sind und im wesentlichen rechtwinklig zu diesem angeordnet sind. Die beiden Schenkel 12 weisen jeweils ein gebogenes Ende 13 auf, welches so bemessen ist, daß ein Umgreifen der Querstrebe 7 möglich ist, wobei ein Umgreifen in einem Bereich von 180° vorgesehen ist. Die jeweils anderen Enden 14 der Schenkel 12 sind verlängert ausgebildet und lagern jeweils einen Schwenkhebel 15, welcher, aus der in Fig. 6 dargestellten Draufsicht auf den Bügel 10 ersichtlich ist, in Richtung des Pfeiles A verschwenkbar ist. Sowohl die Draufsicht der Fig. 6 als auch die Seitenansicht der Fig. 7 zeigen den Bügel 10 in einer Stellung, in welcher er unter dem auf der Sitzfläche 4 des Vordersitzes 3 aufliegenden Gurt 5 durchführbar ist. Nachdem der Bügel 10 in eine der Darstellung der Fig. 5 entsprechende Position gebracht wurde, werden die Schwenkhebel 15 aus der in Fig. 6 und 7 dargestellten Position in die in Fig. 8 gezeigte Stellung verschwenkt, wobei die äußeren, abgewinkelten Enden der Schwenkhebel 15 jeweils an das zugeordnete gebogene Ende 13 des jeweiligen Schwenkels 12 angenähert sind. Auf diese Weise wird die Querstrebe 7, welche in Fig. 8 als Rohr dargestellt ist, fest zwischen die gebogenen Enden 13 und die Schwenkhebel 15 eingeklemmt. Durch eine entsprechende Dimensionierung der Schwenkhebel 15 ist es möglich, eine entsprechend starke Klemmwirkung zu erzielen, mittels der verhindert wird, daß der Bügel 10 seitlich relativ zu der Querstrebe 7 verrutschen kann. Zusätzlich kann das freie Ende jedes Schwenkhebels 15, welches in dem gezeigten Ausführungsbeispiel umgebogen ausgebildet ist, mit einem elastischen material 16 überzogen sein, welches zum einen die Verletzungsgefahr herabsetzt und zum anderen die oben beschriebene Klemmwirkung verstärkt. In Fig. 8 ist in schematischer Weise die Lage des Gurts 5 angedeutet, wobei gemäß der in Fig. 8 gezeigten Anordnung des Bügels 10 die Sitzfläche 4 des Vordersitzes 3 auf der rechten Seite der Fig. 8 gelegen ist. Insoweit unterscheidet sich das in den Fig. 6 bis 8 gezeigte Ausführungsbeispiel von dem in Fig. 5 dargestellten Ausführungsbeispiel, da die gebogenen Enden 13 des Ausführungsbeispiels der Fig. 6 bis 8 in anderer Richtung als bei dem in Fig. 5 dargestellten Ausführungsbeispiel gebogen sind.

Die Erfindung ist nicht auf die gezeigten Ausführungsbeispiele beschränkt, vielmehr ist es möglich, daß Gestell 2 bzw. dessen in Fahrtrichtung vorneliegenden Bereich in seiner Form gegenüber dem gezeigten Ausführungsbeispiel zu variieren. Weiterhin ist es möglich, die erfindungsgemäße Eingriffseinrichtung in vielfältiger anderer Weise auszubilden. Auch eine andere Anordnung oder Führung des Gurtes 5, beispielsweise quer zur Kraftfahrzeuglängsachse ist möglich.

**Patentansprüche**

1. Kinderrückhaltesystem für ein Kraftfahrzeug mit einer Liegeschale (1) und einem die Liegeschale (1) tragenden, auf einem Vordersitz (3) des Kraftfahrzeuges aufgelegten starren Gestell (2), welches mit der Liegeschale (1) verbunden ist, wobei ein Bereich des Gestells (2) mit einem Gurt (5) in Eingriff befindlich ist, **dadurch gekennzeichnet, daß** die Liegeschale (1) mit dem dem Vordersitz (3) zugeordneten, an der Kraftfahrzeugkarosserie gelagerten Rückhaltegurt gehalten ist, und daß der Gurt (5) mit einem in Fahrtrichtung vorneliegenden Bereich des Gestells (2) in Eingriff befindlich ist, wobei der Gurt (5) die Sitzfläche (4) des Vordersitzes (3) in Richtung der Kraftfahrzeuglängsachse vollständig umschlingend angeordnet ist, und daß die Enden des Gurtes (5) selbst miteinander verbindbar sind.

2. Kinderrückhaltesystem nach Anspruch 1, **dadurch gekennzeichnet, daß** die Enden des Gurtes (5) mittels eines Gurtschlosses lösbar verbunden sind.

3. Kinderrückhaltesystem nach einem der Ansprüche 1 oder 2, **dadurch gekennzeichnet,** daß das Gestell (2) eine in Fahrtrichtung vorneliegende Querstrebe (7) umfaßt, welche in ihrem mittleren Bereich eine Eingriffsvorrichtung für den Gurt (5) aufweist.

4. Kinderrückhaltesystem nach Anspruch 3, **dadurch gekennzeichnet, daß** die Eingriffsvorrichtung in Form zweier im mittleren Bereich der Querstrebe (7) angeordneter Anschläge (8) ausgebildet ist, wobei die Anschläge (8) zueinander einen Abstand aufweisen, der der Breite des Gurtes (5) angepaßt ist.

5. Kinderrückhaltesystem nach Anspruch 3, **dadurch gekennzeichnet, daß** die Eingriffsvorrichtung in Form eines gelenkig an der Querstrebe (7) gelagerten, den Gurt (5) umgreifenden Riegels (9) ausgebildet ist.

6. Kinderrückhaltesystem nach Anspruch 3, **dadurch gekennzeiuchnet, daß** die Eingriffsvorrichtung in Form eines die Querstrebe (7) zum Teil umgreifenden und in diese einhängbaren Bügels (10) ausgebildet ist.

7. Kinderrückhaltesystem nach Anspruch 6, **dadurch gekennzeichnet, daß** der Bügel (10) ein im eingehängten Zustand im wesentlichen parallel zur Querstrebe (7) angeordnetes Mittelteil (11) sowie zwei mit dem Mittelteil (11) verbundene Schenkel (12) aufweist, deren eines freie Ende (13) zum Umgreifen der Querstrebe (7) jeweils gebogen ausgebildet ist und an deren anderem Ende jeweils ein Schwenkhebel (15) schwenkbar gelagert ist.

8. Kinderrückhaltesystem nach Anspruch 7, **dadurch gekennzeichnet, daß** der Schwenkhebel (15) in eine dem freien Ende (13) zugewandte Stellung bringbar ist.

9. Kinderrückhaltesystem nach einem der Ansprüche 6 bis 8, **dadurch gekennzeichnet,** daß die Schenkel (12) zueinander einen Abstand aufweisen, der zumindest der Breite des Gurtes (5) gleich ist.

## Claims

1. A child restraint system for a motor vehicle, comprising a child's seat (1) and a rigid frame (2) carrying the child's seat (1) and placed on a front seat (3) of the motor vehicle, said frame being connected to the child's seat (1), one zone of the frame (2) being engaged by a belt (5), characterised in that the child's seat (1) is held by the seat belt associated with the front seat (3) and mounted on the motor vehicle body, and in that the belt (5) is in engagement with a zone of the frame (2) which is situated forwardly in the direction of travel, the belt (5) being disposed so as to completely wrap around the seat surface (4) of the front seat (3) in the direction of the motor vehicle longitudinal axis, and in that the ends of the belt (5) themselves are adapted to be interconnected.

2. A child restraint system according to claim 1, characterised in that the ends of the belt (5) are releasably connected by a belt lock.

3. A child restraint system according to claim 1 or 2, characterised in that the frame (2) comprises a cross-member (7) situated forwardly in the direction of travel and having an engagement device for the belt (5) in its central zone.

4. A child restraint system according to claim 3, characterised in that the engagement device is constructed in the form of two stops (8) disposed in the central zone of the cross-member (7), the stops (8) being spaced apart by an amount adapted to the width of the belt (5).

5. A child restraint system according to claim 3, characterised in that the engagement device is constructed in the form of a latch (9) pivotally mounted on the cross-member (7) and engaging around the belt (5).

6. A child restraint system according to claim 3, characterised in that the engagement device is constructed in the form of a yoke (10) partly engaging around the cross-member (7) and adapted to be engaged therein.

7. A child restraint system according to claim 6, characterised in that the yoke (10) comprises a central part (11) which in the engaged state is substantially parallel to the cross-member (7), and two arms (12) connected to the central part (11), one free end (13) of each such arm being bent to engage around the cross-member (7) while the other end of each arm has a pivoting lever (15) pivotally mounted thereon.

8. A child restraint system according to claim 7, characterised in that the pivoting lever (15) is adapted to be brought into a position facing the free end (13).

9. A child restraint system according to any one of claims 6 to 8, characterised in that the arms (12) are spaced apart by an amount at least equal to the width of the belt (5).

## Revendications

1. Système de retenue pour enfant pour un véhicule automobile, comportant une coque de couchette (1) et un cadre rigide (2), portant la coque de couchette (1), qui est placé sur un siège avant (3) du véhicule automobile et qui est assemblé à la coque de couchette (1), une région du cadre (2) se trouvant en engagement avec une sangle (5), **caractérisé** en ce que la coque de couchette (1) est maintenue par la ceinture de sécurité qui est associée au siège avant (3) et qui est montée sur la carrosserie du véhicule automobile, en ce que la sangle (5) se trouve en engagement avec une région du cadre (2) qui se trouve vers l'avant dans le sens de marche, la sangle (5) étant disposée en entourant complètement la face d'assise (4) du siège avant (3) dans le sens de l'axe longitudinal du véhicule automobile, et en ce que les extrémités de la sangle (5) elle-même peuvent être mutuellement assemblées.

2. Système de retenue pour enfant selon la revendication 1, **caractérisé** en ce que les extrémités de la sangle (5) sont mutuellement assemblées de manière détachable à l'aide d'une boucle de fermeture.

3. Système de retenue pour enfant selon la revendication 1 ou 2, **caractérisé** en ce que le cadre (2) comprend un montant transversal (7) situé à l'avant dans le sens de marche, qui présente dans sa région centrale un dispositif d'engagement pour la sangle (5).

4. Système de retenue pour enfant selon la revendication 3, **caractérisé** en ce que le dispositif d'engagement est réalisé sous la forme de deux butées (8) disposées dans la région centrale du montant transversal (7), les butées (8) présentant un écartement mutuel qui est adapté à la largeur de la sangle (5).

5. Système de retenue pour enfant selon la revendication 3, **caractérisé** en ce que le dispositif d'engagement est réalisé sous la forme d'un moyen de verrouillage (9) articulé au montant transversal (7) et s'engageant autour de la sangle (5).

6. Système de retenue pour enfant selon la revendication 3, **caractérisé** en ce que le dispositif d'engagement est réalisé sous la forme d'un étrier (10) qui entoure partiellement le montant transversal (7) et qui peut lui être accroché.

7. Système de retenue pour enfant selon la revendication 6, **caractérisé** en ce que l'étrier (10) présente une partie centrale (11) qui, à l'état accroché, est disposé sensiblement parallèlement au montant transversal (7), ainsi que deux ailes (12) assemblées à la partie centrale (11) et dont une extrémité libre respective (13) est recourbée afin de s'engager autour du montant transversal (7), tandis qu'un levier pivotant (15) est monté en pivotement à l'autre extrémité respective.

8. Système de retenue pour enfant selon la revendication 7, **caractérisé** en ce que le levier pivotant (15) peut être amené à une position tournée vers l'extrémité libre (13).

9. Système de retenue pour enfant selon l'une des revendications 6 à 8, **caractérisé** en ce que les ailes (12) présentent un écartement mutuel qui est au moins égal à la largeur de la sangle (5).

FIG.1

FIG.2

FIG.3

FIG.4

FIG.5

_Fig. 6_

_Fig. 7_

Fig. 8